# EUROPÄISCHE PATENTANMELDUNG

(11) **EP 4 438 216 A1**
(43) Veröffentlichungstag der Anmeldung: **02.10.2024**
(21) Anmeldenummer: 23164397.4
(22) Anmeldetag: 27.03.2023
(51) Int. Cl.: B23K 11/11, B23K 20/12, B23K 26/22, B23K 26/356

(54) **BAUTEIL MIT PUNKTSCHWEISSÜBERLAPPVERBINDUNGEN**

(71) Anmelder: Helmholtz-Zentrum hereon GmbH, 21502 Geesthacht (DE)
(72) Erfinder: KASHAEV, Nikolai, 21522 Hittbergen (DE); KLUSEMANN, Benjamin, 21382 Brietlingen (DE); KELLER, Sören, 82140 Olching (DE); SUHUDDIN, Uceu Fuad Hasan, 21502 Geesthacht (DE); MOHR, Tim, 21335 Lüneburg (DE); VENTZKE, Volker, 23564 Lübeck (DE); DORN, Falk, 21035 Hamburg (DE)
(74) Vertreter: Seemann & Partner Patentanwälte mbB

(57) **Zusammenfassung**

Die Erfindung betrifft u.a. ein Verfahren zum Aufbereiten von einem wenigstens eine Punktschweißüberlappverbindung (18) aufweisenden Bauteil (10), wobei in einem Bereitstellungsschritt das Bauteil (10) mit zwei miteinander verbundenen Werkstücken (12, 14) bereitgestellt wird oder ist, wobei die Werkstücke (12, 14) des Bauteils (10) in einem Überlappungsbereich (16) einander überlappen und in dem Überlappungsbereich (16) mittels wenigstens einer oder mehrerer Punktschweißüberlappverbindungen (18) miteinander verschweißt sind, und wobei in einem weiteren anschließenden Bearbeitungsverfahrensschritt die wenigstens eine oder mehrere Punktschweißüberlappverbindungen (18) im Überlappungsbereich (16) der Werkstücke (12, 14) mittels einer ein Laser-Shock-Peening-Verfahren ausführenden Vorrichtung (20) mit Laserpulsen eines Lasers der Vorrichtung (20) an einer oder an beiden Oberflächen des Überlappungsbereichs (16) der Werkstücke (12, 14) bearbeitet werden.

## Beschreibung

Die Erfindung betrifft ein Verfahren zum Aufbereiten von einem wenigstens eine Punktschweißüberlappverbindung aufweisenden Bauteil. Ferner betrifft die Erfindung ein Bauteil mit zwei miteinander verbundenen Werkstücken, wobei die Werkstücke des Bauteils in einem Überlappungsbereich einander überlappen. Außerdem betrifft die Erfindung eine Verwendung einer ein Laser-Shock-Peening-Verfahren ausführenden Vorrichtung.

Es ist allgemein bekannt, dass beispielsweise Bauteile mit zwei flächigen Werkstücken, wie zum Beispiel Blechen, in einem Überlappungsbereich der beiden Werkstücke unter Verwendung von Schweißverfahren miteinander verbunden werden. Beispielsweise werden hierbei die Werkstücke durch ein Reibpunktschweißverfahren oder durch ein Nachfüll-Reibpunktschweißverfahren im Überlappungsbereich durch Punktschweißüberlappverbindungen verschweißt.

Bei mechanisch stark beanspruchten Bauteilen, wie zum Beispiel Bauteilen im Flugzeugbau, werden hohe Anforderungen an die Ermüdungsdauer gestellt, so dass diese Bauteile möglichst lange ohne oder mit wenig Rissbildung eingesetzt werden können.

Im Fall von Punktschweißüberlappverbindungen ist zur Verbesserung des Ermüdungsverhaltens von miteinander punktverschweißten Werkstücken vorgesehen, dass durch konstruktive Maßnahmen, wie zum Beispiel Erhöhung der Anzahl der Punktschweißstellen oder durch Anpassung der Lage bzw. Größe der einzelnen Punktschweißstellen der Überlappungsbereich vergrößert wird, wodurch das Gewicht der lasttragenden Struktur erhöht wird.

Eine Aufgabe der Erfindung besteht darin, bei punktverschweißten Verbindungen von Werkstücken die Lebensdauer eines Bauteils sowie die Ermüdungseigenschaften des Bauteils auf einfache Weise, insbesondere ohne Erhöhung des Gewichts des Bauteils, zu verbessern.

Gelöst wird diese Aufgabe durch ein Verfahren zum Aufbereiten von einem wenigstens eine Punktschweißüberlappverbindung aufweisenden Bauteil, wobei in einem Bereitstellungsschritt das Bauteil mit zwei miteinander verbundenen Werkstücken bereitgestellt wird oder ist, wobei die Werkstücke des Bauteils in einem Überlappungsbereich einander überlappen und in dem Überlappungsbereich mittels wenigstens einer oder mehrerer Punktschweißüberlappverbindungen miteinander verschweißt sind, und wobei in einem weiteren anschließenden Bearbeitungsverfahrensschritt die wenigstens eine oder mehrere Punktschweißüberlappverbindungen im Überlappungsbereich der Werkstücke mittels einer ein Laser-Shock-Peening-Verfahren ausführenden Vorrichtung, insbesondere Laser-Shock-Peening-Vorrichtung, mit Laserpulsen eines Lasers der Vorrichtung an einer oder an beiden Oberflächen des Überlappungsbereichs der Werkstücke bearbeitet werden.

Die Erfindung beruht auf dem Gedanken, dass nach der Herstellung des Bauteils mit zwei miteinander punktverschweißten Werkstücken die Punktschweißüberlappverbindungen im Überlappungsbereich der Werkstücke im nachfolgenden Bearbeitungsverfahrensschritt durch die Anwendung des Laser-Shock-Peening-Verfahrens nachbearbeitet werden, wodurch das Ermüdungsverhalten des Bauteils bei zyklischer Beanspruchung von Überlappverbindungen zwischen zwei metallischen oder einem metallischen und einem nicht metallischen Werkstück verbessert wird. Insbesondere wird das Ermüdungsverhalten des Bauteils durch die Einbringung von Druckeigenspannungen mittels des Laser-Shock-Peening-Verfahrens in kritische Bereiche der Punktschweißüberlappverbindungen verbessert. Hierzu ist im Bearbeitungsverfahrensschritt eine Vorrichtung vorgesehen, die eingerichtet ist, das Laser-Shock-Peening-Verfahren auszuführen. Mittels des Laser-Shock-Peening-Verfahrens (LSP) werden unter Verwendung von Laserpulsen eines gepulsten Lasers in den metallischen Werkstücken Druckeigenspannungen durch bewirkte mechanische Schockwellen, die lokale plastische Verformungen im Werkstück hervorrufen, erzeugt.

Für die Herstellung der Punktschweißüberlappverbindungen ist es im Rahmen der Erfindung vorgesehen, dass die Punktschweißüberlappverbindungen durch ein Schmelz-Schweißverfahren, wie zum Beispiel Laserpunktschweißen, Widerstandpunktschweißen sowie Festphase-Schweißverfahren wie das Nachfüll-Reibpunktschweißen (Refill Friction Stir Spot Welding (RFSSW)) oder das Reibpunktschwei-ßen (Friction Stir Spot Welding), ausgebildet werden oder sind. Vorzugsweise wird der Überlappungsbereich der zwei Werkstücke des Bauteils auf ausschließlich einer Oberseite oder auf beiden Seiten (Oberseite und Unterseite) des Bauteils mittels des Laser-Shock-Peening-Verfahrens bearbeitet.

Durch die ausgebildeten Druckeigenspannungen in den Punktschweißüberlappverbindungen, die durch das Laser-Shock-Peening-Verfahren induziert werden, werden beispielsweise im Fall einer zyklischen Beanspruchung des Bauteils maximale Zugspannungen an kritischen Stellen des Bauteils reduziert, wodurch an den kritischen Stellen das (Kurz-)Risswachstum eines Risses bzw. von Rissen verzögert oder verlangsamt wird oder ein Rissarrest eines Risses bzw. von Rissen bewirkt wird.

Außerdem ist es im Rahmen der Erfindung möglich, dass durch den mittels des Laser-Shock-Peening-Verfahrens bewirkten oder induzierten Druckeigenspannungen eine Verlangsamung des Wachstums der von den kritischen Stellen möglicherweise entstandenen weiterwachsenden Rissen erfolgt. Beispielsweise wird das Wachstum von zum Beispiel langen Rissen verlangsamt, wodurch die bewirkten oder induzierten Druckeigenspannungen die gesamte Lebensdauer eines Überlappungsbereichs bzw. von Punktschweißüberlappverbindungen im Überlappungsbereich der Werkstücke verlängern.

Darüber hinaus ist die Anwendung des Verfahrens vorteilhaft bei der Nachbearbeitung von bereits vorermüdeten Bauteilen im Bereich des Überlappungsbereichs, der durch die Behandlung der Punktschweißüberlappverbindungen mittels des Laser-Shock-Peening-Verfahrens die Ermüdungslebensdauer der Bauteile signifikant verlängert wird. Dadurch hat das Laser-Shock-Peening-Verfahren einen positiven Effekt als präventive Maßnahme oder Reparatur von bereits vorhandenen oder entstandenen Ermüdungsrissen oder dergleichen im Bereich der Punktschweißüberlappverbindungen. Durch das Laser-Shock-Peening-Verfahren wird das Ermüdungsverhalten von Punktschweißüberlappverbindungen im Vergleich zu nicht-nachbearbeiteten, d. h. ungepeenten, Punktschweißüberlappverbindungen verbessert.

Ferner ist in einer Ausgestaltung des Verfahrens vorgesehen, dass die einander überlappenden Werkstücke jeweils aus Metall, vorzugsweise aus Eisen (Fe), Nickel (Ni), Titan (Ti), Aluminium (Al), Kupfer (Cu) oder Magnesium (Mg), oder einer Metalllegierung, vorzugsweise Eisen (Fe), Titan (Ti), Aluminium (Al), Kupfer (Cu) und/oder Magnesium (Mg) aufweisenden Legierung, hergestellt sind.

In einer alternativen Ausgestaltung des Verfahrens ist vorgesehen, dass ein erstes Werkstück aus einem Verbundkunststoff, vorzugsweise aus kohleverstärktem Kunststoff (CFK) oder glasfaserverstärktem Kunststoff (GFK), hergestellt ist und ein zweites Werkstück aus Metall, vorzugsweise aus Eisen (Fe), Titan (Ti), Nickel (Ni), Aluminium (Al), Kupfer (Cu) oder Magnesium (Mg), oder einer Metalllegierung, vorzugsweise Eisen (Fe), Titan (Ti), Nickel (Ni), Aluminium (Al), Kupfer (Cu) und/oder Magnesium (Mg) aufweisenden Legierung, hergestellt ist.

Darüber hinaus zeichnet sich eine Ausgestaltung des Verfahrens dadurch aus, dass wenigstens ein oder mehrere Bereiche der Punktschweißüberlappverbindungen vor der Durchführung des Bearbeitungsverfahrensschritts Spannungskonzentrationen aufweisen und im Bearbeitungsverfahrensschritt mittels der Laserpulse bearbeitet werden. Die Spannungskonzentrationen in den Bereichen der Punktschweißüberlappverbindungen sind hierbei intrinsisch und/oder auf der Oberfläche einer Punktschweißüberlappverbindung ausgebildet. Hierbei wirken die Spannungskonzentrationen als Rissinitiierungstellen und/oder als (Anfangs-)Risse.

Dazu ist vorteilhafterweise bei dem Verfahren vorgesehen, dass die Bereiche mit Spannungskonzentrationen durch oder mit Kerben und/oder Schweißdefekten und/oder Poren und/oder Rissen ausgebildet sind.

Außerdem zeichnet sich das Verfahren dadurch aus, dass die Punktschweißüberlappverbindungen als Laser-Punktschweißüberlappverbindungen oder als Widerstand-Punktschweißüberlappverbindungen oder als Festphase-Punktschweißüberlappverbindungen oder als Reibpunktschweißüberlappverbindungen oder als Nachfüllreibpunktschweißüberlappverbindung ausgebildet sind.

Außerdem wird die Aufgabe gelöst durch ein Bauteil mit zwei miteinander verbundenen Werkstücken, wobei die Werkstücke des Bauteils in einem Überlappungsbereich einander überlappen und in dem Überlappungsbereich mittels wenigstens einer oder mehrerer Punktschweißüberlappverbindungen miteinander verschweißt sind, wobei die wenigstens eine oder mehrere Punktschweißüberlappverbindungen im Überlappungsbereich der Werkstücke gepeent sind.

Vorzugsweise ist das Bauteil erhältlich durch Ausführung eines Verfahrens zum Aufbereiten von einem wenigstens eine Punktschweißüberlappverbindung aufweisenden Bauteil, wie voranstehend beschrieben. Hierzu wird ausdrücklich auf die voranstehenden Ausführungen ausdrücklich verwiesen.

Außerdem wird die Aufgabe gelöst durch eine Verwendung einer ein Laser-Shock-Peening-Verfahren ausführenden Vorrichtung, insbesondere Laser-Shock-Peening-Vorrichtung, zur Durchführung eines voranstehend beschriebenen Verfahrens zum Aufbereiten von einem wenigstens eine Punktschweißüberlappverbindung aufweisenden Bauteil.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Experimenten mit Bauteilen aus zwei metallischen Werkstücken exemplarisch beschrieben.

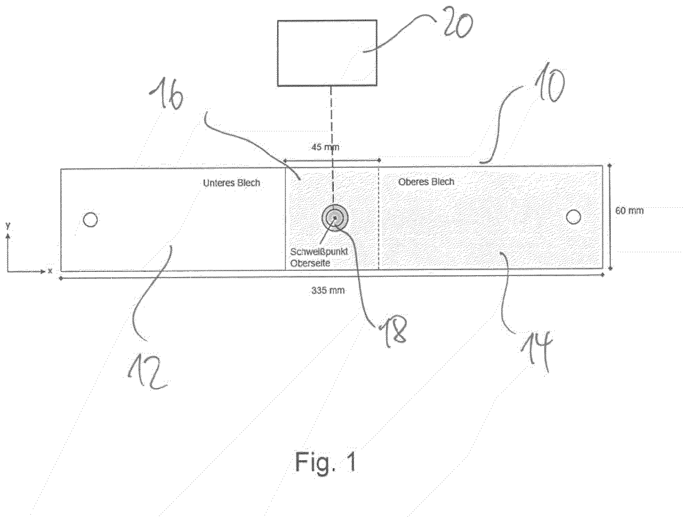

Fig. 1 zeigt schematisch die Geometrie von einem beispielhaft hergestellten Bauteil 10. Das Bauteil 10 weist zwei rechteckförmige Werkstücke 12, 14 auf, die in einem Überlappungsbereich 16 einander überlappen und unter Ausbildung einer Punktschweißüberlappverbindung 18 miteinander im Überlappungsbereich 16 verschweißt sind.

Das Hauptlegierungselement für die Werkstücke 12, 14 aus AA2024-T3 ist Kupfer. Die genaue Zusammensetzung der Legierung ist in Tabelle 1 angegeben.

**Tabelle 1: Legierungselemente von AA2024-T3**

| Element | Anteil [%] |
|---|---|
| Al | 90,7 - 94,7 |
| Cu | 3,8 - 4,9 |
| Mg | 1,2-1,8 |
| Mn | 0,3 - 0,9 |
| Fe | 0 - 0,5 |
| Zn | 0 - 0,25 |
| Ti | 0 - 0,15 |
| Cr | 0 - 0,1 |
| Andere | 0 - 0,15 |

Die Werkstücke 12, 14 haben jeweils eine Dicke von 2 mm und weisen keine Plattierschicht oder dergleichen auf.

Der Werkstoff AA2024-T3 für die Werkstücke 12, 14 liegt für alle Versuche in Form von gewalzten Blechen mit einer Dicke von 2 mm vor. Für die Ermüdungsversuche ist eine Geometrie der Bauteile 10 gewählt, die auf den Vorgaben von DIN EN ISO 14324 basiert (DIN EN ISO 14324:2003-12).

Wie aus Figur 1 ersichtlich ist, beträgt die Länge der Überlappungsfläche der Werkstücke 12, 14 im Überlappungsbereich 45 mm. Der Schweißpunkt bzw. die Punktschweißüberlappverbindung 18 ist in die Überlappungsfläche des Überlappungsbereichs 16 aufgebracht. Außerdem sind an den Enden der Werkstücke 12, 14 Löcher mit 5 mm Durchmesser für die Einspannung in eine entsprechende Prüfmaschine ausgebildet.

Um die Bauteile 10 herzustellen, wurden die Werkstücke 12, 14, jeweils bestehend aus AA2024-T3, mittels eines Nachfüll-Reibpunktschweiß-Verfahrens (Refill Friction Stir Spot Welding (RFSSW)) miteinander im Überlappungsbereich durch Ausbildung der Punktschweißüberlappverbindung 18 verschweißt.

Die Schweißparameter für die Bauteile 10 wurden einheitlich festgelegt. Es wird keine Variation der Schweißparameter vorgenommen. Die Schweißparameter mit den zugehörigen Werten sind Tabelle 2 zu entnehmen.

**Tabelle 2: Schweißparameter für die Herstellung der gepeenten und ungepeenten Bauteile**

| Schweißparameter | Parameterwert |
|---|---|
| Schweißzeit [s] | 5,8 |
| Eintauchtiefe [mm] | 2,35 |
| Rotationsgeschwindigkeit des Werkzeugs [U/min] | 1800 |

Zudem wurden Ermüdungsversuche mit unbehandelten, d. h. ungepeenten RFSSW-verschweißten Bauteilen 10 durchgeführt. Ferner wurden entsprechende Bauteile 10 durch Laser-Shock-Peening (LSP) durch die Vorrichtung 20 im Bereich der Punktschweißüberlappverbindung 18 nachbearbeitet und ebenfalls getestet.

Für die Untersuchungen wurden verschiedene Bauteile 10 hergestellt und danach mittels der eine Laser-Shock-Peening-Verfahren ausführenden Vorrichtung 20 durch Beaufschlagung der jeweiligen Punktschweißüberlappverbindung 18 mit Laserpulsen nachbearbeitet.

Als Bauteile 10 wurden Bauteile aus den beiden Werkstücken 12, 14 mit einer einseitigen LSP-Behandlung (auf einer Seite des jeweiligen Bauteils), einer zweiseitigen LSP-Behandlung (auf beiden Seiten des jeweiligen Bauteils) sowie einer zweiseitigen LSP-Behandlung zur Reparatur einer rissbehafteten RFSSW-Überlappverbindung untersucht.

Hierbei wurden die Eigenspannungsmessungen der verschiedenen Bauteile 10 mittels der Bohrlochmethode durchgeführt. Hierzu wurde das Messsystem PRISM von der stresstech GmbH eingesetzt. Außerdem wurden Ermüdungsversuche an serverhydraulischen Prüfmaschinen des Herstellers Schenck durchgeführt.

Bei den durchgeführten Untersuchungen der verschiedenen Bauteile 10 konnte nachgewiesen werden, dass Laser-Shock-Peening (LSP) einen positiven Einfluss auf die Ermüdungslebensdauer der als Nachfüll-Reibpunktschweiß-Verbindungen ausgebildeten Punktschweißüberlappverbindungen der Bauteile 10 hat.

Es wurden hierzu Ermüdungsversuche bei den Bauteilen 10 mit und gepeenten, einseitig gepeenten und beidseitig gepeenten Punktschweißüberlappverbindungen durchgeführt und beispielsweise unter Verwendung einer Weibull-Verteilung statistisch ausgewertet.

Ferner wurden Bauteile 10 nach gezielter Vorschädigung gepeent und anschließend im Hinblick auf ihre Ermüdungslebensdauer getestet, so dass untersucht wurde, ob sich Laser-Shock-Peening als Reparaturmaßnahme für bereits beschädigte Punktschweißüberlappverbindungen (RFSSW-Verbindungen) eignet.

Die Eigenspannungsmessungen bei den untersuchten Bauteilen 10 haben gezeigt, dass zum Beispiel eine Laserenergie von 3 J in Verbindung mit zwei geschossenen Sequenzen an Laserimpulsen hohe Druckeigenspannungen im Bereich der Punktschweißüberlappverbindungen erzeugt. Dabei hat sich gezeigt, dass gepeente Bauteile während der durchgeführten Ermüdungsversuche im Vergleich zu ungepeenten Bauteilen eine vielfache Anzahl an Zyklen bis zum Versagen durchlaufen haben. Ferner hat sich gezeigt, dass beidseitig gepeente Bauteile die höchste Anzahl an Lastwechseln durchlaufen. Dabei hat sich insbesondere gezeigt, dass Laser-Shock-Peening sowohl vor Beginn einer zyklischen Belastung der Bauteile als auch nach bereits eingetretener Schädigung (Risse oder dergleichen) eine hohe Verlängerung der Ermüdungslebensdauer der Bauteile 10 bewirkt.

Insgesamt hat sich bei den Untersuchungen gezeigt, dass Laser-Shock-Peening geeignet ist, die Ermüdungslebensdauer RFSSWverschweißter Bauteile 10 aus AA2023-T3-Blechen als Werkstücke deutlich zu verlängern.

### Bezugszeichenliste

- 10: Bauteil
- 12: Werkstück
- 14: Werkstück
- 16: Überlappungsbereich
- 18: Punktschweißüberlappverbindung
- 20: Vorrichtung

## Patentansprüche

1. Verfahren zum Aufbereiten von einem wenigstens eine Punktschweißüberlappverbindung (18) aufweisenden Bauteil (10), wobei in einem Bereitstellungsschritt das Bauteil (10) mit zwei miteinander verbundenen Werkstücken (12, 14) bereitgestellt wird oder ist, wobei die Werkstücke (12, 14) des Bauteils (10) in einem Überlappungsbereich (16) einander überlappen und in dem Überlappungsbereich (16) mittels wenigstens einer oder mehrerer Punktschweißüberlappverbindungen (18) miteinander verschweißt sind, und wobei in einem weiteren anschließenden Bearbeitungsverfahrensschritt die wenigstens eine oder mehrere Punktschweißüberlappverbindungen (18) im Überlappungsbereich (16) der Werkstücke (12, 14) mittels einer ein Laser-Shock-Peening-Verfahren ausführenden Vorrichtung (20), insbesondere Laser-Shock-Peening-Vorrichtung (20), mit Laserpulsen eines Lasers der Vorrichtung (20) an einer oder an beiden Oberflächen des Überlappungsbereichs (16) der Werkstücke (12, 14) bearbeitet werden.

2. Verfahren nach Anspruch 1, **dadurch gekennzeichnet, dass** die einander überlappenden Werkstücke (12, 14) jeweils aus Metall, vorzugsweise aus Eisen (Fe), Nickel (Ni), Titan (Ti), Aluminium (Al), Kupfer (Cu) oder Magnesium (Mg), oder einer Metalllegierung, vorzugsweise Eisen (Fe), Titan (Ti), Aluminium (Al), Kupfer (Cu) und/oder Magnesium (Mg) aufweisenden Legierung, hergestellt sind.

3. Verfahren nach Anspruch 1, **dadurch gekennzeichnet, dass** ein erstes Werkstück aus einem Verbundkunststoff, vorzugsweise aus kohleverstärktem Kunststoff (CFK) oder glasfaserverstärktem Kunststoff (GFK), hergestellt ist und ein zweites Werkstück aus Metall, vorzugsweise aus Eisen (Fe), Titan (Ti), Nickel (Ni), Aluminium (Al), Kupfer (Cu) oder Magnesium (Mg), oder einer Metalllegierung, vorzugsweise Eisen (Fe), Titan (Ti), Nickel (Ni), Aluminium (Al), Kupfer (Cu) und/oder Magnesium (Mg) aufweisenden Legierung, hergestellt ist.

4. Verfahren nach einem der Ansprüche 1 bis 3, **dadurch gekennzeichnet, dass** wenigstens ein oder mehrere Bereiche der Punktschweißüberlappverbindungen (18) vor der Durchführung des Bearbeitungsverfahrensschritts Spannungskonzentrationen aufweisen und im Bearbeitungsverfahrensschritt mittels der Laserpulse bearbeitet werden.

5. Verfahren nach Anspruch 4, **dadurch gekennzeichnet, dass** die Bereiche mit Spannungskonzentrationen durch oder mit Kerben und/oder Schweißdefekten und/oder Poren und/oder Rissen ausgebildet sind.

6. Verfahren nach einem der Ansprüche 1 bis 5, **dadurch gekennzeichnet, dass** die Punktschweißüberlappverbindungen (18) als Laser-Punktschweißüberlappverbindungen oder als Widerstand-Punktschweißüberlappverbindungen oder als Festphase-Punktschweißüberlappverbindungen oder als Reibpunktschweißüberlappverbindungen oder als Nachfüllreibpunktschweißüberlappverbindung ausgebildet sind.

7. Bauteil (10) mit zwei miteinander verbundenen Werkstücken (12, 14), wobei die Werkstücke (12, 14) des Bauteils (10) in einem Überlappungsbereich (16) einander überlappen und in dem Überlappungsbereich (16) mittels wenigstens einer oder mehrerer Punktschweißüberlappverbindungen (18) miteinander verschweißt sind, wobei die wenigstens eine oder mehrere Punktschweißüberlappverbindungen (18) im Überlappungsbereich (16) der Werkstücke (12, 14) gepeent sind.

8. Bauteil (10) nach Anspruch 7, erhältlich durch Ausführung eines Verfahrens nach einem der Ansprüche 1 bis 6.

9. Verwendung einer ein Laser-Shock-Peening-Verfahren ausführenden Vorrichtung (20), insbesondere Laser-Shock-Peening-Vorrichtung (20), zur Durchführung eines Verfahrens nach einem der Ansprüche 1 bis 6.
